# EUROPEAN PATENT APPLICATION

(11) **EP 0 921 308 A2**
(43) Date of publication of application: **09.06.1999**
(21) Application number: 98204019.8
(22) Date of filing: 02.12.1998
(51) Int. Cl.: F03B 13/10

(54) **Submerged water turbine set in dam**

(30) Priority: 02.12.1997 NL 1007668
(71) Applicant: Lagerwey Windturbine B.V., 3770 AG Barneveld (NL)
(72) Inventor: Oudakker, Gerrit, 1721 DC Broek op Langedijk (NL); Van Kampen, Willem Antoon, 2311 TP Leiden (NL)
(74) Representative: Assendelft, Jacobus H.W.

(57) **Abstract**

The invention is concerned with a system to produce useful energy from the flow of a fluid such as water or air, wherein a shaftless turbine is used, i.e. a turbine, the one or more in said fluid submerged driving elements (such as blades) of which drive eccentric elements in a orbiting movement around the centre of rotation of said driving elements, wherein said eccentric elements are located e.g. at a distance from the radial inner side of said driving elements, e.g. at the radial outer side of said driving elements.

## Description

Known water power installations for generating useful energy, such as electrical power, from flow (e.g. head) of water, have a cumbersome volume due to e.g. the turbines to be used. Such known turbines have blades which are submerged in and driven by the flowing water and which are mounted onto a central shaft containing the common rotational centre of the blades and which drive said shaft, while said shaft drives a generator which is typically outside the water. This is one reaseon why the costs for equipment and maintenance are high while extensive civil engineering works have to be carried out with during said works channel or river diversion and extensive auxiliary structures, e.g. substantially attacking the environment. To be economically feasible, such known installations therefor can only be put in action on large scale, requiring e.g. large operations in the environment, such as building an impoundment.

It is now proposed, to apply a shaftless turbine. With that the blades or different driving elements submerged in the flowing fluid do not drive a central shaft, but one or more orbiting bodies rotating around the spaced centre of rotation of the blades, which bodies can e.g. be present at the radial outer side of the blades. In an embodiment said orbiting bodies determine the rotor of an electrical generator. With their radial outer side the blades can be journalled in a ring element. The ring element can also determine the stator of an electrical generator. The bearing of the blades can be e.g. magnetic. Different, preferably contact less, bearings are also feasible such that the friction and mechanical wear are minimal.

The bearing ring can e.g. be integrated into a weir wall or stop log. The bearing ring can also serve as flow conducting element, particularly if located in a water or air stream that is not generated by an artificial head, such as tidal flows, gulf streams or wind.

Advantages are as follows:

No shaft lead-through with associated seal; compact structure; no disturbance of the fluid flow by a central shaft; more equal loading of the bearing; tunnel effect; no alignment difficulties since a long driving shaft is not present; possibility to avoid one or more mechanical transmissions.

According to a preferred embodiment a weir for only little artificial head of e.g. one meter to the most is equipped with the present shaftless turbine. In Holland there are some tens of sites along rivers, channels and canals where the invention could be applied. Such weir, known as such, is e.g. applied to maintain a predetermined water level upstream from the weir, e.g. for shipping or agricultural activities, wherein generally the upper edge of the weir is adjusted to the desired upstream water level, such that excess water is exhausted over said upper edge.

The weir according to the invention is obtained by anchoring a preferably platen like water retaining body, e.g. formed by one or more stop logs, on both sides in the banks, e.g. because said banks are provided with haws or rebate profiles such that the water retaining body can be slid in it from above with its side edges. The water retaining body is provided with a conveniently dimensioned through-hole comprising the turbine according to the invention. The turbine, connected to convenient power electronics, generates electrical power for e.g. local application, such as e.g. a dwelling. It can also be coupled to the public electricity supply system. It is feasible that with such a weir a power between about 10 and 1000 kW, particularly about 100 kW can be generated. The weir can also be provided with more than one shaftless turbine.

The water retaining body can be applied as prefabricated element, which keeps the installation costs low. So it has become possible to produce energy at sites where already for some other reason an artificial head is generated and maintained, while at present at said site no use is made of or can be made of the possibility to produce the energy that is released there.

Prior to installation of the water retaining body the turbine is preferably pre-assembled.

The turbine according to the invention can possibly be applied as a pump, too. Or as combined turbine and pump, wherein e.g. alternatingly water is pumped to a higher located reservoir, e.g. if there is an excess of energy from e.g. a power station running on fossile fuel, while if there is a demand for energy one allows the reservoir to empty through the same pumps/turbines to generate electricity.

It is e.g. also possible to apply the principle of the invention to a small scale weir which is already in service, e.g. by replacing one or more of the stop logs already present by the water retaining body with the integrated shaftless turbine. In this way energy can be produced already after a short while without civil engineering works.

To be able to maintain the desired water level upstream the weir, the weir can further be provided with means to prevent that the water level drops too much, e.g. to a level below the area at the top of the shafless turbine, in particular to a level near the lower side of the shaftless turbine.

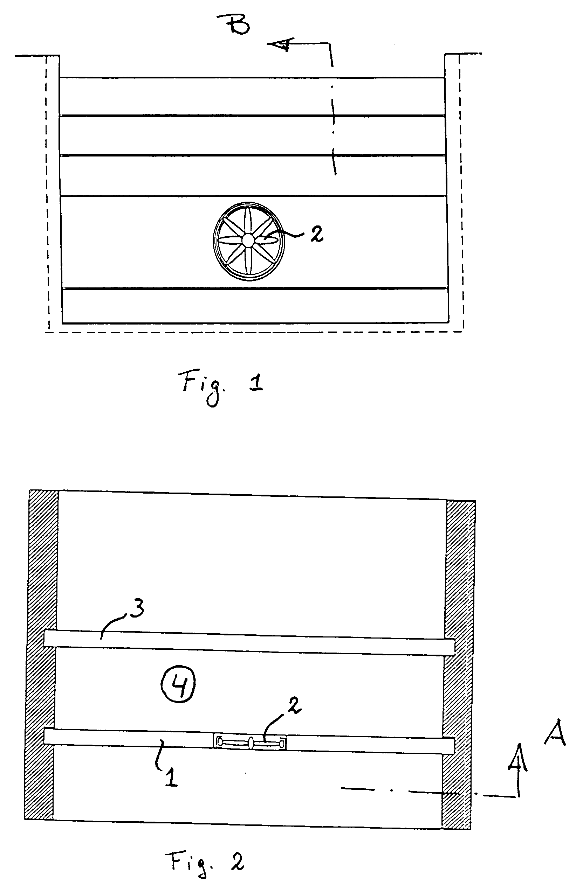

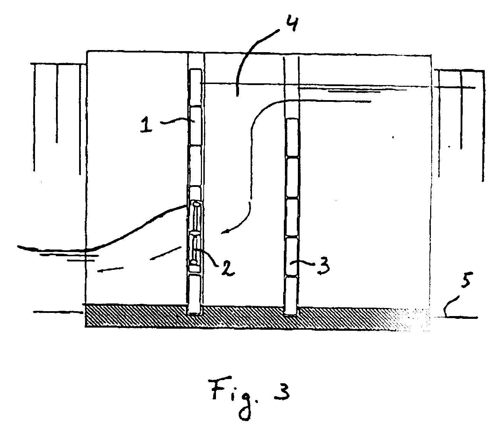

The enclosed drawings show a non-limiting embodiment. Figure 1 is a sectional front view along the line A in figure 2; figure 2 is a top view and figure 3 is a cross sectional side view along the line B in figure 1 of a weir according to the invention.

As shown in the enclosed drawings, upstream from the water retaining body 1 with the shaftless turbine 2 a second, at least substantially water tight water retaining body 3 can be located, such that between both water retaining bodies a buffer reservoir 4 is formed. When there is not enough supply of water, water will no longer flow over the second, upstream, water retaining body 3, such that the buffer reservoir 4 is emptied through the turbine untill a level below the upper edge area of the turbine. If the buffer reservoir is exhausted enough, the turbine 2 can e.g. come to a hold. By making the location of the turbine as close as possible to the under water bottom 5, the buffer reservoir can be exhausted as far as possible, or if a buffer reservoir is not present, the turbine can remain active untill a water level as low as possible. By e.g. giving both water retaining bodies an over flow edge of equal level, e.g. peaks in the water supply can be exhausted by bypassing the turbine without causing an increase of the upstream water level. Also other implements for this are feasible, such as drain valves in the water retaining element. It is preferred to adapt the discharge of the turbine to the discharge of the water body in which the turbine is located. E.g. a discharge equal to the mean discharge of the water body, or a discharge lower than said mean discharge, such that one has to drain more often, or a discharge higher than said mean discharge such that draining is less often required, however resulting in a higher risk that the turbine comes to a hold due to shortage of water. A combination of one turbine for continuous engagement with e.g. lower discharge than the mean discharge of the water body and one turbine for temporary engagement such that the discharge of both turbines together e.g. is equal to or larger than the mean discharge, such that e.g. draining can be limited to a minimum or even completely avoided such that as much energy as possible can be produced.

## Claims

1. System to produce useful energy from the flow of a fluid such as water or air, wherein a shaftless turbine is used, i.e. a turbine, the one or more in said fluid submerged driving elements (such as blades) of which drive eccentric elements in an orbiting movement around the centre of rotation of said driving elements, wherein said eccentric elements are located e.g. at a distance from the radial inner side of said driving elements, e.g. at the radial outer side of said driving elements.

2. Method for producing useful energy from the flow of water, wherein the energy production takes place at a location where for a reason different than energy production, the water level is maintained in an artificial manner.

3. Method for producing useful energy from the flow of water, wherein an existing weir without turbine is selected, and one or more of its stop logs or water retaining elements are replaced by a water retaining element with a turbine producing useful energy from said flow.

4. Method according to any of the proceeding claims 2 or 3, wherein a buffer reservoir is made, e.g. between two water retaining bodies mutually spaced in the flow direction of the water.
